(19) Europäisches Patentamt
European Patent Office
Office européen des brevets

(11) **EP 3 309 209 A1**

(12) **EUROPEAN PATENT APPLICATION**
published in accordance with Art. 153(4) EPC

(43) Date of publication:
**18.04.2018 Bulletin 2018/16**

(21) Application number: **16807099.3**

(22) Date of filing: **03.06.2016**

(51) Int Cl.:
**C08L 11/00** (2006.01)    **C08K 3/04** (2006.01)
**C08K 3/06** (2006.01)    **C08K 3/36** (2006.01)
**C08K 5/521** (2006.01)    **C08L 9/00** (2006.01)
**C08L 9/06** (2006.01)    **C08L 23/28** (2006.01)
**C08L 23/34** (2006.01)    **C08L 27/04** (2006.01)
**C08L 27/24** (2006.01)    **F16L 11/08** (2006.01)
**C08J 5/00** (2006.01)

(86) International application number:
**PCT/JP2016/002701**

(87) International publication number:
**WO 2016/199389 (15.12.2016 Gazette 2016/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.06.2015 JP 2015117006**

(71) Applicant: **Bridgestone Corporation
Tokyo 104-8340 (JP)**

(72) Inventor: **TSUNENISHI, Youhei
Tokyo 104-8340 (JP)**

(74) Representative: **Oxley, Robin John George
Marks & Clerk LLP
90 Long Acre
London WC2E 9RA (GB)**

(54) **RUBBER COMPOSITION FOR HOSE, AND HOSE**

(57) This disclosure aims to provide a hose rubber composition and a hose capable of achieving both the flame retardance as a vulcanized rubber and the shelf stability as an unvulcanized rubber. The hose rubber composition of this disclosure is a hose rubber composition comprising an organic compound, the hose rubber composition obtainable by compounding a compounding ingredient to a rubber component, wherein: a chloroprene rubber is contained at an amount of less than 70 parts by mass in 100 parts by mass of the rubber component; a chlorinated polymer other than chloroprene rubber is contained in the rubber component as an optional component; a sulfur and, as an optional component, a chlorinated compounding ingredient are contained in the compounding ingredient; and a relation (1) is satisfied:

$$\sum_{k=1}^{n} A_k X_k > 0.2 \cdot Y \qquad \cdots \quad (1)$$

where $A_k$ represents a chlorination ratio without unit of each type of the chloroprene rubber, the chlorinated polymer other than chloroprene rubber or the chlorinated compounding ingredient as a chlorinated compound contained in the hose rubber composition; $X_k$ represents a content in terms of mass% of each type of the chlorinated compound in the hose rubber composition; n represents a total number of types of the chlorinated compound in the hose rubber composition; and Y represents a total content in terms of mass% of the organic compound and the sulfur in the hose rubber composition.

# FIG. 1

**Description**

TECHNICAL FIELD

This disclosure relates to a hose rubber composition and a hose.

BACKGROUND

Research has been conventionally conducted to improve the weather resistance, fatigue resistance, abrasion resistance, etc. of hydraulic hoses used in construction machines and the like (for example, see Patent Literature (PTL) 1).
Hydraulic hoses have been increasingly used in mines such as coal mines in recent years, and required to have improved flame retardance for safety during work. For example, flame retardance required of hydraulic hoses is mainly defined by the MSHA (Mine Safety and Health Administration) standard in the United States.
Moreover, with the use of very large hydraulic excavator in recent years, large-diameter high-pressure hoses have been increasingly used in harsher use environments. This has created the tendency to demand hoses with high pressure resistance and long life.
Regarding a chlorinated polymer such as chloroprene rubber from which vulcanized rubber used in automobile rubber members, hoses, rubber molded objects, and rubber vibration isolators is obtained, research has been conducted to further improve heat resistance without impairing mechanical properties, compression set, and elongation fatigue performance (for example, see PTL 2).
However, addition of a large amount of a chloroprene rubber, which is crystalline and has chemical structural parts with high reactivity, brings a defect that its self-reactivity is enhanced, and thus scorching of unvulcanized rubber is likely to occur, which may become a factor of productivity inhibition (production defect, such as shortened duration due to deterioration of the shelf stability and appearance defect due to rubber scorching, are likely to occur). On the other hand, if the addition amount of the chloroprene rubber is reduced, there is a problem that the flame retardance cannot be ensured.
In this way, a rubber capable of achieving both the flame retardance as a vulcanized rubber and the shelf stability as an unvulcanized rubber has not been obtained, and development of such rubber has been strongly desired.

CITATION LIST

Patent Literature

PTL1: JP2010-121006A
PTL2: WO2009/035109A1

SUMMARY

(Technical Problem)

Then, this disclosure aims to provide a hose rubber composition capable of achieving both the flame retardance as a vulcanized rubber and the shelf stability as an unvulcanized rubber. Moreover, this disclosure aims to provide a hose capable of achieving both the flame retardance and the product appearance.

(Solution to Problem)

The hose rubber composition of this disclosure is a hose rubber composition comprising an organic compound, the hose rubber composition obtainable by compounding a compounding ingredient to a rubber component, wherein: a chloroprene rubber is contained at an amount of less than 70 parts by mass in 100 parts by mass of the rubber component; a chlorinated polymer other than chloroprene rubber is contained in the rubber component as an optional component; a sulfur and, as an optional component, a chlorinated compounding ingredient are contained in the compounding ingredient; and a relation (1) is satisfied:

$$\sum_{k=1}^{n} A_k X_k > 0.2 \cdot Y \qquad \cdots \quad (1)$$

where $A_k$ represents a chlorination ratio without unit of each type of the chloroprene rubber, the chlorinated polymer other than chloroprene rubber or the chlorinated compounding ingredient as a chlorinated compound contained in the hose rubber composition; $X_k$ represents a content in terms of mass% of each type of the chlorinated compound in the hose rubber composition; n represents a total number of types of the chlorinated compound in the hose rubber composition; and Y represents a total content in terms of mass% of the organic compound and the sulfur in the hose rubber composition.

(Advantageous Effect)

According to this disclosure, it is possible to provide a hose rubber composition capable of achieving both the flame retardance as a vulcanized rubber and the shelf stability as an unvulcanized rubber. Moreover, according to this disclosure, it is possible to provide a hose capable of achieving both the flame retardance and the product appearance.

BRIEF DESCRIPTION OF THE DRAWINGS

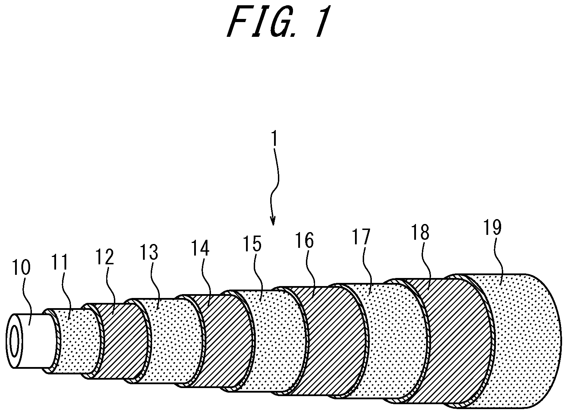

FIG. 1 illustrates a perspective view of an example of a laminate structure of a hose of an embodiment according to this disclosure, which uses a hose rubber composition of an embodiment according to this disclosure.

DETAILED DESCRIPTION

(Hose rubber composition)

Hereinafter, the hose rubber composition of this disclosure is described in details based on its embodiment.
The hose rubber composition of this disclosure is obtained by compounding a compounding ingredient containing a sulfur and, as an optional component, a chlorinated compounding ingredient, to a rubber component containing a chloroprene rubber and, as an optional component, a chlorinated polymer other than chloroprene rubber.
Moreover, the hose rubber composition of this disclosure satisfies the following relation (1):

$$\sum_{k=1}^{n} A_k X_k > 0.2 \cdot Y \qquad \cdots \quad (1)$$

where $A_k$ represents a chlorination ratio (without unit) of each type of the chloroprene rubber, the chlorinated polymer other than chloroprene rubber or the chlorinated compounding ingredient as a chlorinated compound contained in the hose rubber composition; $X_k$ represents a content (mass%) of each type of the chlorinated compound in the hose rubber composition; n represents a total number of types of the chlorinated compound in the hose rubber composition; and Y represents a total content (mass%) of the organic compound and the sulfur in the hose rubber composition.
In the case where the hose rubber composition of this disclosure, for example, contains a chloroprene rubber with a chlorination ratio of $A_1$ and a chloroprene rubber with a chlorination ratio of $A_2$ respectively at a content (mass%) of $X_1$ and $X_2$, and contains one type of a chlorinated compounding ingredient with a chlorination ratio of $A_3$ at a content (mass%) of $X_3$, the left side of the aforementioned relation (1) means a total value of $A_1X_1$, $A_2X_2$ and $A_3X_3$.
Note that the "organic compound" is one with its weight reduced until 500°C when measuring the vulcanized rubber with thermal gravimetric analysis (TGA) in the air at a temperature raise rate of 10°C/min. Specific examples of the "organic compound" include: (i) the aforementioned rubber component (for example, chloroprene rubber and chlorinated polymer other than chloroprene rubber); and (ii) the chlorinated compounding ingredient, plasticizer (for example, oil), age resistor, wax, organic acid metal salt (organic acid cobalt salt, etc.), vulcanizing agent other than sulfur, vulcanization accelerator, vulcanization retardant, etc. as the aforementioned compounding ingredient.
On the other hand, specific examples of "inorganic compounds" excluded from the "organic compounds" include carbon black, silica, antimony compound, talc, clay, zinc oxide, magnesium oxide, calcium oxide, calcium carbonate, magnesium hydroxide, calcium hydroxide, etc. as the aforementioned compounding ingredient.
The relation (1) is based on a technical idea of defining a necessary chlorine amount for generating necessary inactive gas (HCl) with respect to a combustion component (the organic compound).
Note that the chlorine is generated from the chloroprene rubber, the chlorinated polymer other than chloroprene rubber and the chlorinated compounding ingredient.
The difference between the left side and the right side of the relation (1) is not specifically limited as long as it is more than 0. This difference is preferably 0.5 or more, more preferably 0.7 or more.
The difference within the preferable range is advantageous from the viewpoint of the flame retardance, more advantageous within the more preferable range.

In the hose rubber composition of this disclosure, it is preferable that in the relation (1), the difference between the left side and the right side is 0.5 or more. According to this configuration, it is possible to improve the flame retardance and the stability.

The ratio between the left side and the right side of the relation (1) (left side/right side) is not specifically limited as long as it is more than 1. This ratio is preferably 1.1 or more, more preferably 1.2 or more.

The ratio within the preferable range is advantageous from the viewpoint of the flame retardance, more advantageous within the more preferable range.

<Rubber component>

The rubber component at least contains a chloroprene rubber (CR), and further contains a chlorinated polymer other than chloroprene rubber (CR), a styrene-butadiene rubber (SBR), a butadiene rubber (BR) or another polymer when necessary.

In the hose rubber composition of this disclosure, it is preferable that the rubber component further contains at least any one of a styrene-butadiene rubber and a butadiene rubber. According to this configuration, it is possible to avoid deterioration of the abrasion resistance of the hose rubber composition, or it is possible to improve the processability (the dimensional stability of extrusion and the extruded surface characteristics).

<<Chloroprene rubber (CR)>>

The chloroprene rubber (CR) is a homopolymer (chloroprene polymer) of a chloroprene monomer or a copolymer (hereinafter referred to as the chloroprene-based copolymer) obtained by polymerizing a mixture of a chloroprene monomer and at least one type of other monomer copolymerizable with the chloroprene monomer (hereinafter referred to as the chloroprene-based monomer).

-Classification of chloroprene rubber-

The chloroprene rubber is classified as sulfur-modified type, mercaptan-modified type, or xanthogen-modified type, according to the type of a molecular weight regulator.

The chloroprene rubber may be any of the modified types. The sulfur-modified type is, however, lower in heat resistance of the polymer itself than the mercaptan-modified type and the xanthogen-modified type, and accordingly the mercaptan-modified type or the xanthogen-modified type is preferably used in the case where higher heat resistance is required.

--Sulfur-modified type--

The sulfur-modified type is a type that plasticizes, with thiuram disulfide, a polymer which is the result of copolymerizing sulfur and the chloroprene monomer or the chloroprene-based monomer, and adjusts it to predetermined Mooney viscosity.

--Mercaptan-modified type--

The mercaptan-modified type is a type that uses alkylmercaptan such as n-dodecylmercaptan, tert-dodecylmercaptan, or octylmercaptan as a molecular weight regulator.

--Xanthogen-modified type--

The xanthogen-modified type uses an alkylxanthogen compound as a molecular weight regulator. The alkylxanthogen compound is not particularly limited, and may be selected as appropriate depending on the purpose. Examples include dimethylxanthogen disulfide, diethylxanthogen disulfide, diisopropylxanthogen disulfide, and diisobutylxanthogen disulfide. These may be used singly or in a combination of two or more.

The amount of the alkylxanthogen compound used is not particularly limited as long as the molecular weight (or Mooney viscosity) of the chloroprene rubber is proper, and may be selected as appropriate depending on the purpose (the structure of the alkyl group or the target molecular weight). The amount of the alkylxanthogen compound used is preferably 0.05 parts to 5.0 parts by mass and more preferably 0.3 parts to 1.0 parts by mass per 100 parts by mass of the chloroprene monomer or the chloroprene-based monomer.

The content of the chloroprene rubber (CR) is not particularly limited as long as it is less than 70 parts by mass or more in 100 parts by mass of the rubber component, and may be selected as appropriate depending on the purpose.

The content of the chloroprene rubber (CR) is preferably 30 parts by mass or more, more preferably 30 parts to 65 parts by mass, particularly preferably 50 parts to 60 parts by mass.

If the content of the chloroprene rubber (CR) is more than 70 parts by mass in 100 parts by mass of the rubber component, the shelf stability cannot be ensured. The content of the chloroprene rubber within the aforementioned preferable range is advantageous from the viewpoint of the flame retardance, the oil resistance and the weather resistance. The more preferable range or the particularly preferable range is advantageous from the viewpoint of the flame retardance, the oil resistance, the weather resistance and the shelf stability.

<<Chlorinated polymer other than chloroprene rubber>>

By compounding the chlorinated polymer to the rubber component, it is possible to improve the flame retardance.

The chlorinated polymer is not specifically limited and may be appropriately selected depending on the purpose. Examples include chlorinated polyethylene (CPE), chlorosulfonated polyethylene (CSM), polyvinyl chloride (PVC), epichlorohydrin rubber (CO) and chlorinated natural rubber. These may be used singly or in a combination of two or more.

Among these, chlorinated polyethylene (CPE), chlorosulfonated polyethylene (CSM) and polyvinyl chloride (PVC) are preferable from the viewpoint of ensuring the flame retardance more securely.

In the case of using polyvinyl chloride (PVC), it is preferable to use a blend rubber (NV) of the acrylonitrile-butadiene rubber (NBR) and soft polyvinyl chloride, which is mentioned below, as the other polymer.

In the hose rubber composition of this disclosure, it is preferable that the chlorinated polymer is at least one type selected from the group consisting of chlorinated polyethylene, chlorosulfonated polyethylene and polyvinyl chloride. According to this configuration, it is possible to ensure the flame retardance more securely.

<<Styrene-butadiene rubber (SBR)>>

The styrene-butadiene rubber (SBR) is a copolymer (styrene-butadiene copolymer) of a styrene monomer and a butadiene monomer, or a copolymer (hereafter referred to as a styrene-butadiene-based copolymer) obtained by polymerizing a mixture (hereafter referred to as a styrene-butadiene-based monomer) of a styrene monomer, a butadiene monomer, and at least one type of other monomer copolymerizable with the styrene monomer and the butadiene monomer.

By compounding the styrene-butadiene rubber (SBR), it is possible to avoid deterioration of the abrasion resistance of the hose rubber composition, and to simultaneously improve the processability (the dimensional stability of extrusion and the extruded surface characteristics).

-Monomer copolymerizable with styrene monomer and butadiene monomer-

The monomer copolymerizable with the styrene monomer and the butadiene monomer is not particularly limited, and may be selected as appropriate depending on the purpose. Examples include: conjugated diene monomers having 5 to 8 carbon atoms such as 2-methyl-1,3-butadiene, 2,3-dimethyl-1,3-butadiene, 1,3-pentadiene, and 1,3-hexadiene; and aromatic vinyl monomers such as p-methylstyrene, a-methylstyrene, and vinylnaphthalene. These may be used singly or in a combination of two or more.

-Styrene content of styrene-butadiene rubber (SBR)-

The styrene content of the styrene-butadiene rubber (SBR) is not particularly limited, and may be selected as appropriate depending on the purpose. The styrene content of the styrene-butadiene rubber (SBR) is preferably 20% to 45% by mass, and more preferably 20% to 35% by mass.

When the styrene content of the styrene-butadiene rubber (SBR) is 20% by mass or more, sufficient effect of preventing a decrease in processability may be attained. When the styrene content of the styrene-butadiene rubber (SBR) is 45% by mass or less, sufficient effect of preventing a decrease in abrasion resistance may be attained. On the other hand, the styrene content of the styrene-butadiene rubber (SBR) within the more preferable range is more advantageous from the viewpoint of the processability and the abrasion resistance.

-Content of styrene-butadiene rubber (SBR)-

The content of the styrene-butadiene rubber (SBR) is not particularly limited, and may be selected as appropriate depending on the purpose. The content of the styrene-butadiene rubber (SBR) is preferably 10 parts to 40 parts by mass in 100 parts by mass of the rubber component.

The content of the styrene-butadiene rubber (SBR) within the preferable range is advantageous from the viewpoint of the abrasion resistance and the processability (the dimensional stability of extrusion and the extruded surface characteristics).

<<Butadiene rubber (BR)>>

The butadiene rubber (BR) is a homopolymer of a butadiene monomer (butadiene polymer) or a copolymer (hereinafter referred to as the butadiene-based copolymer) obtained by polymerizing a mixture of a butadiene monomer and at least one type of other monomer copolymerizable with the butadiene monomer (hereinafter referred to as the butadiene-based monomer). The butadiene rubber (BR) may be terminal-modified.
By compounding the butadiene rubber (BR), it is possible to improve the abrasion resistance.

-Cis-1,4 bond content of butadiene rubber (BR)-

The cis-1,4 bond content of the butadiene rubber (BR) is not particularly limited, and may be selected as appropriate depending on the purpose. The cis-1,4 bond content is preferably 90% or more, more preferably 93% or more, and particularly preferably 95% or more.
If the butadiene rubber has a cis-1,4 bond content of less than 90% and is not terminal-modified, there are cases where the abrasion resistance improvement effect cannot be attained sufficiently. On the other hand, the cis-1,4 bond content within the more preferable range or a terminal-modified BR even if the cis-1,4 bond content is less than 90% is advantageous from the viewpoint of the abrasion resistance, more advantageous if within the particularly preferable range.
Note that the cis-1,4 bond content may be measured by using $^1$H-NMR, $^{13}$C-NMR, FT-IR, etc.

-Content of butadiene rubber (BR)-

The content of the butadiene rubber (BR) is not particularly limited, and may be selected as appropriate depending on the purpose. The content of the butadiene rubber (BR) is preferably 10 parts to 40 parts by mass in 100 parts by mass of the rubber component.
The content of the butadiene rubber (BR) within the aforementioned preferable range is advantageous from the viewpoint of the flame retardance and the abrasion resistance.

<<Other polymers>>

The other polymer is not particularly limited, and may be selected as appropriate depending on the purpose. Examples include natural rubber (NR), butyl rubber (IIR), acrylonitrile butadiene rubber (NBR), hydrogenated acrylonitrile-butadiene rubber (H-NBR), acrylic rubber (ACM), ethylene-propylene rubber (EPDM), hydrin rubber (ECO), silicone rubber (Q) and fluororubber (FKM). These may be used singly or in a combination of two or more.

<Compounding ingredient>

The compounding ingredient at least contains a sulfur, and further contains chlorinated compounding ingredient, carbon black, silica, plasticizer, antimony compound and other components when necessary.
The hose rubber composition of this disclosure preferably further contains a carbon black. According to this configuration, it is possible to exhibit excellent flame retardance and reinforcement performance.

<<Sulfur>>

By compounding the sulfur to the rubber component, it is possible to obtain sufficient elasticity and mechanical property as a rubber.
The compounding amount of the sulfur per 100 parts by mass of the rubber component is not specifically limited and may be appropriately selected depending on the purpose. The compounding amount of the sulfur is preferably 0.1 parts to 3.0 parts by mass, more preferably 0.5 parts to 2.5 parts by mass.
The compounding amount of the sulfur within the preferable range is advantageous from the viewpoint of the elasticity and the mechanical property as a rubber, more advantageous within the more preferable range.

<<Chlorinated compounding ingredient>>

By compounding the chlorinated compounding ingredient to the rubber component, it is possible to ensure the flame retardance.

The chlorinated compounding ingredient is not specifically limited and may be appropriately selected depending on the purpose. Examples include chlorinated aliphatic compound such as chlorinated paraffin and chlorine-phosphorus-based composite flame retardant such as chlorinated phosphate ester compound. These may be used singly or in a combination of two or more.

Among these, from the viewpoint of the capability of flame retardation, chlorinated aliphatic compound and chlorinated phosphate ester compound are preferable, and chlorinated paraffin is more preferable.

The content of the chlorinated paraffin is not specifically limited and may be appropriately selected depending on the purpose. The content of the chlorinated paraffin is preferably 5 parts to 50 parts by mass per 100 parts by mass of the rubber component.

The content of the chlorinated paraffin within the preferable range is advantageous from the viewpoint of the flame retardance exhibition as a vulcanized rubber.

The chlorination ratio of the chlorinated paraffin is not specifically limited and may be appropriately selected depending on the purpose, but is preferably 40% to 70%.

The chlorination ratio of the chlorinated paraffin within the preferable range is advantageous from the viewpoint of the flame retardance exhibition as a vulcanized rubber.

The chlorinated paraffin is not specifically limited and may be appropriately selected depending on the purpose. Specific examples include a chlorinated paraffin with a chlorination ratio of 70% (solid) and a chlorinated paraffin with a chlorination ratio of 43% (liquid).

The chlorinated phosphate ester is not specifically limited and may be appropriately selected depending on the purpose. Specific examples include tris(chloropropyl)phosphate and condensate of tris(chloropropyl)phosphate and dialkylene glycol.

In the hose rubber composition of this disclosure, it is preferable that the chlorinated compounding ingredient is at least any one among a chlorinated aliphatic compound and a chlorinated phosphate ester, and it is more preferable that the chlorinated compounding ingredient is a chlorinated paraffin as the chlorinated aliphatic compound. According to such configuration, it is possible to ensure the flame retardance more securely.

In the hose rubber composition of this disclosure, it is preferable that the chlorinated paraffin is compounded at an amount of 5 parts to 50 parts by mass per 100 parts by mass of the rubber component, and it is more preferable that the chlorination ratio of the chlorinated paraffin is 40% to 70%. According to such configuration, it is possible to attain the flame retardance as a vulcanized rubber more securely.

-Compounding amount of chlorinated compounding ingredient-

The compounding amount of the chlorinated compounding ingredient per 100 parts by mass of the rubber component is not specifically limited and may be appropriately selected depending on the purpose. The compounding amount of the chlorinated compounding ingredient is preferably 20 parts by mass or more, more preferably 20 parts to 30 parts by mass. The compounding amount of the chlorinated compounding ingredient within the preferable range is advantageous from the viewpoint of the flame retardance exhibition as a vulcanized rubber, more preferable within the more preferable range.

In the hose rubber composition of this disclosure, it is preferable that the chloroprene rubber is contained at an amount of 30 parts by mass or more in 100 parts by mass of the rubber component, and the chlorinated compounding ingredient is compounded at an amount of 20 parts by mass or more per 100 parts by mass of the rubber component. Such configuration is advantageous from the viewpoint of the capability of ensuring the flame retardance more securely.

<Carbon black>

The carbon black can exhibit the flame retardance and the reinforcement performance by being compounded to the rubber component.

The carbon black is not specifically limited and may be selected as appropriate depending on the purpose. Examples include FEF class, HAF class, ISAF class, SAF class, GPF class, SRF class, FT class and MT class. These may be used singly or in a combination of two or more.

Among these, from the viewpoint of the balance among the abrasion resistance and the processability, FEF class (iodine adsorption: 40 to 60 mg/g (g/kg), DBP oil absorption: 100 to 130 mL/100g ($100 \times 10^{-5}$ m$^3$/kg to $130 \times 10^{-5}$ m$^3$/kg) is desirable.

The iodine adsorption of the carbon black is not specifically limited and may be selected as appropriate depending on the purpose. The iodine adsorption of the carbon black is preferably 20 to 160 mg/g, more preferably 40 to 60 mg/g.

The iodine adsorption of the carbon black within the aforementioned preferable range is advantageous from the viewpoint of the balance among the abrasion resistance and the processability, more advantageous within the aforementioned more preferable range.

The DBP oil absorption of the carbon black is not specifically limited and may be selected as appropriate depending on the purpose. The DBP oil absorption of the carbon black is preferably 30 to 150 mL/100g, more preferably 100 to 130 mL/100g.

The DBP oil absorption of the carbon black within the aforementioned preferable range is advantageous from the viewpoint of the balance among the abrasion resistance and the processability, more advantageous within the aforementioned more preferable range.

It is preferable that the carbon black has an iodine adsorption of 20 to 160 mg/g and a DBP oil absorption of 30 to 150 mL/100g, more preferably an iodine adsorption of 40 to 60 mg/g and a DBP oil absorption of 100 to 130 mL/100g..

The iodine adsorption and the DBP oil absorption of the carbon black within the aforementioned preferable range is advantageous from the viewpoint of the balance among the abrasion resistance and the processability, more advantageous within the aforementioned more preferable range.

-Compounding amount of carbon black-

The compounding amount of the carbon black is not specifically limited and may be selected as appropriate depending on the purpose. The compounding amount of the carbon black is preferably 40 to 80 parts by mass per 100 parts by mass of the rubber component.

The compounding amount of the carbon black per 100 parts by mass of the rubber component within the aforementioned preferable range is advantageous from the viewpoint of the flame retardance and the processability.

<Silica>

By compounding the silica to the rubber component, it is possible to improve the flame retardance (in particular, shortens afterglow response), to improve the processability (the dimensional stability of extrusion and the extruded surface characteristics), and to maintain the abrasion resistance.

The nitrogen adsorption specific surface area ($N_2SA$) of the silica is not particularly limited, and may be selected as appropriate depending on the purpose. The nitrogen adsorption specific surface area ($N_2SA$) of the silica is preferably 70 $m^2/g$ to 300 $m^2/g$, more preferably 100 $m^2/g$ to 280 $m^2/g$, and particularly preferably 150 $m^2/g$ to 250 $m^2/g$.

If the nitrogen adsorption specific surface area ($N_2SA$) of the silica is 70 $m^2/g$ or more, it is possible to attain sufficient effect of improvement of the flame retardance and the abrasion resistance, and if 300 $m^2/g$ or less, it is possible to attain sufficient effect of improvement of the dispersibility and the processability. On the other hand, the nitrogen adsorption specific surface area ($N_2SA$) of the silica within the more preferable range is advantageous from the viewpoint of the balance among the flame retardance, the abrasion resistance, the dispersibility and the processability, more advantageous within the particularly preferable range.

-Compounding amount of silica-

The content of the silica is not particularly limited, and may be selected as appropriate depending on the purpose. The content of the silica is preferably 5 parts to 25 parts by mass and more preferably 15 parts to 25 parts by mass per 100 parts by mass of the rubber component.

If the compounding amount of the silica is 5 parts by mass or more, it is possible to improve the flame retardance (in particular, shortens the afterglow response), and if 25 parts by mass or less, it is possible to avoid excessive hardening. On the other hand, the content of the silica within the above-mentioned more preferable range is advantageous from the viewpoint of the flame retardance and the processability (the dimensional stability of extrusion and the extruded surface characteristics), in the compounding ratio of each component.

In the hose rubber composition of this disclosure, it is further preferable that the silica is compounded at an amount of 5 parts to 25 parts by mass per 100 parts by mass of the rubber component. According to this configuration, it is possible to improve the flame retardance (in particular, shortens afterglow response), and to improve the processability (the dimensional stability of extrusion and the extruded surface characteristics).

<Plasticizer>

By compounding the plasticizer to the rubber component, it is possible to improve the initial elongation (the softness and even the crack resistance).

The plasticizer is not particularly limited, and may be selected as appropriate depending on the purpose. Examples include paraffin-based oil other than chlorinated paraffin, aroma-based oil, naphthene-based oil, phosphate ester-based oil other than chlorinated phosphate ester-based oil and ester-based oil. These may be used singly or in a combination of two or more.

In particular, phosphate ester-based oil is preferable from the viewpoint of flame retardance. Moreover, a mixture of spindle oil (mainly containing paraffin-based oil) and aroma oil (mainly containing aroma-based oil) is particularly preferable. The mix ratio of the mixture of the spindle oil and the aroma oil (the mass of the spindle oil/the mass of the aroma oil) is not particularly limited, and may be selected as appropriate depending on the purpose. The mix ratio is preferably 1/2 to 1/1.

When the mix ratio is 1/2 or more, it is possible to attain sufficient effect of suppressing an increase in tackiness during work. When the mix ratio is 1/1 or less, it is possible to avoid deterioration of the flame retardance.

-Compounding amount of plasticizer-

The compounding amount of the plasticizer is not specifically limited and may be selected as appropriate depending on the purpose. The compounding amount of the plasticizer is preferably 20 parts by mass or less, more preferably 5 parts to 20 parts by mass, particularly preferably 10 to 15 parts by mass per 100 parts by mass of the rubber component.

Even if the plasticizer is compounded, if the compounding amount of the plasticizer is 20 parts by mass or less per 100 parts by mass of the rubber component, it is possible to suppress deterioration of the flame retardance. On the other hand, the compounding amount of the plasticizer within the aforementioned more preferable range is advantageous from the viewpoint of the balance among the flame retardance, the initial elongation (the softness and even the crack resistance) and the processability, more advantageous within the particularly preferable range.

In the hose rubber composition of this disclosure, it is further preferable that the plasticizer is compounded at an amount of 20 parts by mass or less per 100 parts by mass of the rubber component. According to this configuration, it is possible to ensure the flame retardance, and improve the softness.

<<Antimony compound>>

The antimony compound is capable of stabilizing the flame retardance by being compounded to the rubber component.

The antimony compound is not specifically limited and may be appropriately selected depending on the purpose. Examples include antimony trioxide, antimony pentoxide and sodium antimonite. These may be used singly or in a combination of two or more.

Among these, from the viewpoint of the retardant effect, antimony trioxide is preferable.

-Compounding amount of antimony compound-

The compounding amount of the antimony compound is not specifically limited and may be appropriately selected depending on the purpose. The compounding amount of the antimony compound is preferably 1 part by mass or more per 100 parts by mass of the rubber component.

The compounding amount of the antimony compound within the preferable range is advantageous from the viewpoint of stabilizing the flame retardance.

<Other components>

As the other components, compounding ingredients generally used in the rubber industry such as inorganic fillers other than the carbon black and the silica such as talc, clay, calcium carbonate and the like; vulcanizing agents such as peroxide vulcanizing agent and the like; vulcanization accelerators; vulcanization accelerator aids such as zinc oxide, stearic acid and the like; vulcanization retardants; age resistors; waxes; anti-scorch agents; softeners; adhesive aids such as silane coupling agent, organic acid salt (organic acid cobalt salt, etc.), resorcin, hexamethylenetetramine, melamine resin and the like; and metal compounds such as magnesium oxide, calcium oxide, calcium carbonate, aluminum hydroxide, magnesium hydroxide, calcium hydroxide and the like may be selected as appropriate and compounded in a range not impairing the object of the disclosure. These compounding agents are preferably commercially available ones.

Note that the rubber composition can be manufactured by kneading, warming, extrusion, etc., with various compounding ingredients selected as appropriate when necessary compounded to a necessary component containing the rubber component and the compounding ingredients.

(Hose)

The hose of this disclosure includes at least a rubber layer, and further includes one or more layers other than the rubber layer and other members when necessary.

The hose of this disclosure has a rubber layer using the hose rubber composition of this disclosure.

According to the hose of this disclosure, it is possible to achieve both the flame retardance and the produce appearance.

-Rubber layer-

The rubber layer is made of the hose rubber composition of this disclosure. The part of the hose to which the rubber layer is applied is not particularly limited, and may be selected as appropriate depending on the purpose. For example, the part may be an intermediate rubber layer not forming the inner or outer surface of the hose and/or an outer surface rubber layer (outer cover rubber layer) forming the outer surface of the hose. The rubber layer is particularly preferably the outer surface rubber layer.

The shape, structure, and size of the outer surface rubber layer are not particularly limited, and may be selected as appropriate depending on the purpose.

The thickness of the outer surface rubber layer is not particularly limited, and may be selected as appropriate depending on the purpose. The thickness of the outer surface rubber layer is preferably 0.3 mm to 3.5 mm, more preferably 0.7 mm to 3.2 mm, and particularly preferably 1.0 mm to 3.0 mm.

When the thickness of the outer rubber layer is 0.3 mm or more, it is possible to avoid shorter life caused by abrasion. When the thickness of the rubber layer is 3.5 mm or less, it is possible to avoid lower flame retardance caused by an increased amount of fuel component, and to avoid degradation of the flexibility, lightweight property, or space saving property of the hose. On the other hand, the thickness of the outer rubber layer within the above-mentioned more preferable range is advantageous from the viewpoint of flame retardance and abrasion life, and the thickness of the rubber layer within the above-mentioned particularly preferable range is more advantageous from the viewpoint of flame retardance and abrasion life.

An example of the laminate structure of the hose of an embodiment according to this disclosure is as illustrated in FIG. 1. In FIG. 1, the hose 1 is a hydraulic hose having an inner surface rubber layer 10, reinforcement layers 12, 14, 16, and 18 having brass-plated wires, intermediate rubber layers 11, 13, 15, and 17, and an outer surface rubber layer 19.

The hose rubber composition of this disclosure is preferably used at least to the outer surface rubber layer 19, and may also be used to all or a part of the intermediate rubber layers 11, 13, 15, 17 and the outer surface rubber layer 19.

Although the structure of the hose illustrated here is made up of a plurality of layers by arranging the inner surface rubber layer 10, the four reinforcement layers 12, 14, 16, and 18, the four intermediate rubber layers 11, 13, 15, and 17, and the outer surface rubber layer 19 from inside, this is not a limitation. For example, the hose may have a three-layer structure in which an inner surface rubber layer, a reinforcement layer, and an outer surface rubber layer are stacked in order. The structure of the hose may be selected as appropriate depending on the required characteristics of the hose. Besides, the reinforcement layers need not be all made of brass-plated wires, and part of the reinforcement layers may be made of organic fibers. The hose may have a resin layer such as ultra high molecular weight polyethylene in its outermost layer to improve the abrasion resistance.

<Method of manufacturing hose>

The method of manufacturing the hose of this disclosure includes, for example, the following inner tube extrusion step, wrapping step, outer cover extrusion step, resin mold coating step, vulcanization step, resin mold peeling step, and mandrel removal step, and further includes other steps selected as appropriate when necessary.

To exemplify with a hose with the structure of FIG. 1, first, a rubber composition for the inner surface rubber layer 10 is extruded onto the outside of a core body (mandrel) whose diameter is substantially the same as the hose inner diameter to coat the mandrel, thus forming the inner surface rubber layer 10 (inner tube extrusion step). A layer made of organic fibers may be introduced on the inner tube rubber layer 10, to prevent irregular winding when braiding wires. Next, a predetermined number of brass-plated wires are braided on the outside of the inner surface rubber layer 10 formed in the inner tube extrusion step to form the reinforcement layer 12 (braiding step), and a sheet of the hose rubber composition of this disclosure is inserted inside the reinforcement layer 12 to form the intermediate rubber layer 11. This is repeated a plurality of times to stack the reinforcement layers 14, 16, and 18 and the intermediate rubber layers 13, 15, and 17 in sequence. The outer surface rubber layer 19 made of the hose rubber composition of this disclosure is then formed (outer cover extrusion step). The outside of the outer surface rubber layer 19 formed in the outer cover extrusion step is coated with a suitable resin as appropriate (resin mold coating step), and the structure is vulcanized under predetermined conditions (vulcanization step). After the vulcanization, the coating resin is peeled away (resin mold peeling step), and the mandrel is removed (mandrel removal step). This produces the hose having the intermediate rubber layers 11, 13, 15, and 17 and the reinforcement layers 12, 14, 16, and 18 between the inner surface rubber layer 10 and the outer surface rubber layer 19.

EXAMPLES

The following describes the presently disclosed tire in more detail through examples. However, the presently disclosed tire is not in any way limited by the following examples and suitable alterations may be made that do not change the essence thereof.

The polymers and rubber compositions described below were prepared. The methods of evaluating the rubber compositions are as follows. The unit of the values shown as the compounding amount in Tables 1 to 13 is parts by mass.

<Evaluation method of rubber composition>

(1) Flame retardance (flame response)

The flame retardance (flame response) was evaluated based on the flame retardance (flame response) evaluation of ASTP 5007 in the Mine Safety and Health Administration (MSHA) standard in the United States, except that in order to evaluate the flame retardance more strictly, the wind speed was changed to 1.0 m/s. The thickness of each evaluation sample obtained by press-vulcanizing a rubber sheet in a mold at 150°C for 60 minutes and cutting it to predetermined dimensions was 3.5 mm.

The evaluation results are shown in Tables 1 to 13. A smaller value as the flame response indicates better flame retardance.

The evaluation criteria are as follows.

Excellent: 0 second or more and 10 seconds or less
Good: more than 10 seconds and 30 seconds or less
Fair: more than 30 seconds and 60 seconds or less
Poor: more than 60 seconds

(2) Shelf stability (viscosity rise ratio)

According to JIS K 6300-1994, a Mooney viscosity at 130°C directly after rubber composition kneading: $ML_{1+4}(ORI)$ and a Mooney viscosity at 130°C after holing this rubber composition in a thermostat chamber at 40°C with 95% RH for 7 days: $ML_{1+4}(AGED)$ were measured, and the shelf stability (viscosity rise ratio) was evaluated according to the following formula. A smaller value indicates better shelf stability.

$$\text{Viscosity rise ratio} = [\{ML_{1+4}(AGED)\} - \{ML_{1+4}(ORI)\}] / \{ML_{1+4}(ORI)\}$$

The measurement results are shown in Tables 1 to 13. The evaluation criteria are as follows.

Excellent: 50% or less
Good: more than 50% and 100% or less
Poor: more than 100%

[Table 1]

| | | | Chlorination ratio | Comparative example 1 | Comparative example 2 | Comparative example 3 | Comparative example 4 | Comparative example 5 |
|---|---|---|---|---|---|---|---|---|
| Organic compound | Rubber component | Chloroprene rubber (CR)*1 | 0.4 | 30 | 50 | 60 | 70 | 80 |
| | | Chlorosulfonated polyethylene (CSM) *2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 70 | 50 | 40 | 30 | 20 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 0 | 0 | 0 | 0 | 0 |
| | | Chlorinated paraffin 40*9 | 0.43 | 0 | 0 | 0 | 0 | 0 |
| | Plasticizer | Spindle oil*10 | 0 | 15 | 15 | 15 | 15 | 15 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |

(continued)

|  | Chlorination ratio | Comparative example 1 | Comparative example 2 | Comparative example 3 | Comparative example 4 | Comparative example 5 |
|---|---|---|---|---|---|---|
| Left side of formula | | 5.6 | 9.3 | 11.2 | 13.1 | 15.0 |
| Right side of formula | | 11.7 | 11.7 | 11.7 | 11.7 | 11.7 |
| Evaluation | Flame response (evaluation result) | Poor | Poor | Poor | Good | Excellent |
| | Flame response (seconds) | 260 | 190 | 120 | 20 | 3 |
| | Viscosity rise ratio | Excellent | Excellent | Good | Poor | Poor |
| Difference between left and right sides | | -6.1 | -2.3 | -0.5 | 1.4 | 3.3 |

[Table 2]

| | | | Chlorination ratio | Comparative example 6 | Comparative example 7 | Comparative example 8 | Example 1 | Example 2 |
|---|---|---|---|---|---|---|---|---|
| Organic compound | Rubber component | Chloroprene rubber (CR) *1 | 0.4 | 30 | 30 | 30 | 30 | 30 |
| | | Chlorosulfonated polyethylene (CSM)*2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 70 | 70 | 70 | 70 | 70 |
| | | Butadiene rubber (BR) *5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 40 | 10 | 20 | 27 | 30 |
| | | Chlorinated paraffin 40 *9 | 0.43 | 0 | 0 | 0 | 0 | 0 |
| | Plasticizer | Spindle oil*10 | 0 | 15 | 15 | 15 | 15 | 15 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |
| Left side of formula | | | | 11.0 | 8.5 | 11.1 | 12.8 | 13.5 |
| Right side of formula | | | | 13.0 | 12.1 | 12.4 | 12.6 | 12.7 |

(continued)

| Chlorination ratio | | Comparative example 6 | Comparative example 7 | Comparative example 8 | Example 1 | Example 2 |
| --- | --- | --- | --- | --- | --- | --- |
| Evaluation | Flame response (evaluation result) | Poor | Poor | Poor | Fair | Excellent |
| | Flame response (seconds) | 180 | 240 | 92 | 35 | 8 |
| | Viscosity rise ratio | Excellent | Excellent | Excellent | Excellent | Excellent |
| Difference between left and right sides | | -2.0 | -3.6 | -1.3 | 0.2 | 0.8 |

[Table 3]

| | | | Chlorination ratio | Comparative example 9 | Comparative example 10 | Example 3 | Example 4 | Example 5 |
|---|---|---|---|---|---|---|---|---|
| Organic compound | Rubber component | Chloroprene rubber (CR)*1 | 0.4 | 50 | 50 | 50 | 50 | 50 |
| | | Chlorosulfonatedpolyethylene (CSM)*2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 50 | 50 | 50 | 50 | 50 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 5 | 10 | 15 | 20 | 25 |
| | | Chlorinated puaffin 40 *9 | 0.43 | 0 | 0 | 0 | 0 | 0 |
| | Plasticizer | Spindle oil*10 | 0 | 15 | 15 | 15 | 15 | 15 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |
| Left side of formula | | | | 10.7 | 12.1 | 13.3 | 14.5 | 15.7 |
| Right side of formula | | | | 11.9 | 12.1 | 12.2 | 12.4 | 12.6 |

EP 3 309 209 A1

(continued)

| Chlorination ratio | | Comparative example 9 | Comparative example 10 | Example 3 | Example 4 | Example 5 |
|---|---|---|---|---|---|---|
| Evaluation | Flame response (evaluation result) | Poor | Poor | Excellent | Excellent | Excellent |
| | Flame response (seconds) | 160 | 84 | 10 | 8 | 5 |
| | Viscosity rise ratio | Excellent | Excellent | Excellent | Excellent | Excellent |
| Difference between left and right sides | | -1.1 | 0.0 | 1.1 | 2.1 | 3.1 |

[Table 4]

| | | | Chlorination ratio | Example 6 | Example 7 | Example 8 | Example 9 | Example 10 |
|---|---|---|---|---|---|---|---|---|
| Organic compound | Rubber component | Chloroprene rubber (CR)*1 | 0.4 | 60 | 60 | 60 | 60 | 60 |
| | | Chlorosulfonated polyethylene (CSM) *2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 40 | 40 | 40 | 40 | 40 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 5 | 10 | 15 | 20 | 25 |
| | | Chlorinated paraffin 40 *9 | 0.43 | 0 | 0 | 0 | 0 | 0 |
| | Plasticizer | Spindle oil*10 | 0 | 15 | 15 | 15 | 15 | 15 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |
| Left side of formula | | | | 12.6 | 13.8 | 15.1 | 16.2 | 17.4 |
| Right side of formula | | | | 11.9 | 12.1 | 12.2 | 12.4 | 12.6 |
| Evaluation | Flame response (evaluation result) | | | Good | Excellent | Excellent | Excellent | Excellent |
| | Flame response (seconds) | | | 27 | 9 | 8 | 4 | 4 |
| | Viscosity rise ratio | | | Good | Good | Good | Good | Good |
| Difference between left and right sides | | | | 0.7 | 1.8 | 2.8 | 3.8 | 4.8 |

[Table 5]

| | | | Chlorination ratio | Comparative example 1 | Comparative example 12 | Comparative example 13 | Comparative example 14 | Comparative example 15 |
|---|---|---|---|---|---|---|---|---|
| Organic compound | Rubber component | Chloroprene rubber (CR)*1 | 0.4 | 70 | 70 | 70 | 70 | 70 |
| | | Chlorosulfonatedpolyethylene (CSM)*2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 30 | 30 | 30 | 30 | 30 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 5 | 10 | 15 | 20 | 25 |
| | | Chlorinated paraffin 40 *9 | 0.43 | 0 | 0 | 0 | 0 | 0 |
| | Plasticizer | Spindle oil*10 | 0 | 15 | 15 | 15 | 15 | 15 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |
| Left side of formula | | | | 14.4 | 15.6 | 16.8 | 17.9 | 19.0 |
| Right side of formula | | | | 11.9 | 12.1 | 12.2 | 12.4 | 12.6 |

| | Chlorination ratio | Comparative example 1 | Comparative example 12 | Comparative example 13 | Comparative example 14 | Comparative example 15 |
|---|---|---|---|---|---|---|
| Evaluation | Flame response (evaluation result) | Excellent | Excellent | Excellent | Excellent | Excellent |
| | Flame response (seconds) | 5 | 3 | 3 | 2 | 1 |
| | Viscosity rise ratio | Poor | Poor | Poor | Poor | Poor |
| Difference between left and right sides | | 2.5 | 3.6 | 4.6 | 5.6 | 6.5 |

[Table 6]

| | | | Chlorination ratio | Comparative example 16 | Comparative example 17 | Comparative example 18 | Comparative example 19 | Comparative example 20 |
|---|---|---|---|---|---|---|---|---|
| Organic compound | Rubber component | Chloroprene rubber (CR)*1 | 0.4 | 30 | 30 | 30 | 30 | 30 |
| | | Chlorosulfonated polyethylene (CSM)*2 | 0.35 | 0 | 0 | 0 | 0 | 0 |
| | | Chlorinated polyethylene (CPE)*3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 70 | 70 | 70 | 70 | 70 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 0 | 0 | 0 | 0 | 0 |
| | | Chlorinated paraffin 40 *9 | 0.43 | 5 | 10 | 15 | 20 | 25 |
| Organic compound | Plasticizer | Spindle oil*10 | 0 | 10 | 5 | 0 | 0 | 0 |
| Inorganic compound | | Zinc oxide | 0 | 5 | 5 | 5 | 5 | 5 |
| | | Magnesium oxide | 0 | 4 | 4 | 4 | 4 | 4 |
| Organic compound | | Wax | 0 | 2 | 2 | 2 | 2 | 2 |
| | | Age resistor | 0 | 3 | 3 | 3 | 3 | 3 |
| | | Cobalt stearate | 0 | 2 | 2 | 2 | 2 | 2 |
| Sulfur | | | 0 | 1 | 1 | 1 | 1 | 1 |
| Organic compound | | Vulcanization accelerator | 0 | 2 | 2 | 2 | 2 | 2 |

(continued)

|  | Chlorination ratio | Comparative example 16 | Comparative example 17 | Comparative example 18 | Comparative example 19 | Comparative example 20 |
|---|---|---|---|---|---|---|
| Left side of formula | | 6.6 | 7.6 | 8.6 | 9.4 | 10.2 |
| Right side of formula | | 11.7 | 11.7 | 11.7 | 11.9 | 12.1 |
| Evaluation | Flame response (evaluation result) | Poor | Poor | Poor | Poor | Poor |
| | Flame response (seconds) | 230 | 210 | 180 | 170 | 155 |
| | Viscosity rise ratio | Excellent | Excellent | Excellent | Excellent | Excellent |
| Difference between left and right sides | | -5.1 | -4.1 | -3.1 | -2.5 | -1.9 |

[Table 7]

| | | | Chlorination ratio | Comparative example 21 | Comparative example 22 | Example 11 | Example 12 | Example 13 |
|---|---|---|---|---|---|---|---|---|
| Organic compound | Rubber component | Chloroprene rubber (CR)*1 | 0.4 | 50 | 50 | 50 | 50 | 50 |
| | | Chlorosulfonatedpolyethylene (CSM)*2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 50 | 50 | 50 | 50 | 50 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 0 | 0 | 0 | 0 | 0 |
| | | Chlorinated paraffin 40 *9 | 0.43 | 5 | 10 | 15 | 20 | 25 |
| | Plasticizer | Spindle oil*10 | 0 | 10 | 5 | 0 | 0 | 0 |
| Inorganic compound | Zinc oxide | | 0 | 5 | 5 | 5 | 5 | 5 |
| | Magnesium oxide | | 0 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |
| Left side of formula | | | | 10.4 | 11.4 | 12.4 | 13.1 | 13.7 |
| Right side of formula | | | | 11.7 | 11.7 | 11.7 | 11.9 | 12.1 |

24

(continued)

| | Chlorination ratio | Comparative example 21 | Comparative example 22 | Example 11 | Example 12 | Example 13 |
|---|---|---|---|---|---|---|
| Evaluation | Flame response (evaluation result) | Poor | Poor | Good | Excellent | Excellent |
| | Flame response (seconds) | 190 | 130 | 23 | 9 | 4 |
| | Viscosity rise ratio | Excellent | Excellent | Excellent | Excellent | Excellent |
| Difference between left and right sides | | -1.3 | -0.3 | 0.7 | 1.2 | 1.7 |

[Table 8]

| | | | Chlorination ratio | Example 14 | Example 15 | Example 16 | Example 17 | Example 18 |
|---|---|---|---|---|---|---|---|---|
| Organic compound | Rubber component | Chloroprene rubber (CR)*1 | 0.4 | 60 | 60 | 60 | 60 | 60 |
| | | Chlorosulfonated polyethylene (CSM)*2 | 0.35 | 0 | 0 | 0 | 0 | 0 |
| | | Chlorinated polyethylene (CPE) *3 | 0.3 | 0 | 0 | 0 | 0 | 0 |
| | | NV*4 | 0.17 | 0 | 0 | 0 | 0 | 0 |
| | | Styrene-butadiene rubber (SBR)*5 | 0 | 40 | 40 | 40 | 40 | 40 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | Silica*7 | 0 | 15 | 15 | 15 | 15 | 15 |
| Organic compound | Chlorinated additive | Chlorinated paraffin 70*8 | 0.7 | 0 | 0 | 0 | 0 | 0 |
| | | Chlorinated paraffin 40*9 | 0.43 | 5 | 10 | 15 | 20 | 25 |
| | Plasticizer | Spindle oil*10 | 0 | 10 | 5 | 0 | 0 | 0 |
| Inorganic compound | | Zinc oxide | 0 | 5 | 5 | 5 | 5 | 5 |
| | | Magnesium oxide | 0 | 4 | 4 | 4 | 4 | 4 |
| Organic compound | | Wax | 0 | 2 | 2 | 2 | 2 | 2 |
| | | Age resistor | 0 | 3 | 3 | 3 | 3 | 3 |
| | | Cobalt stearate | 0 | 2 | 2 | 2 | 2 | 2 |
| Sulfur | | | 0 | 1 | 1 | 1 | 1 | 1 |
| Organic compound | | Vulcanization accelerator | 0 | 2 | 2 | 2 | 2 | 2 |
| Left side of formula | | | | 12.2 | 13.2 | 14.2 | 14.9 | 15.5 |
| Right side of formula | | | | 11.7 | 11.7 | 11.7 | 11.9 | 12.1 |

(continued)

| | Chlorination ratio | Example 14 | Example 15 | Example 16 | Example 17 | Example 18 |
|---|---|---|---|---|---|---|
| Evaluation | Flame response (evaluation result) | Excellent | Excellent | Excellent | Excellent | Excellent |
| | Flame response (seconds) | 9 | 5 | 3 | 3 | 2 |
| | Viscosity rise ratio | Good | Good | Good | Good | Good |
| Difference between left and right sides | | 0.5 | 1.5 | 2.5 | 3.0 | 3.5 |

[Table 9]

| | | | Chlorination ratio | Comparative example 23 | Comparative example 24 | Comparative example 25 | Comparative example 26 | Comparative example 27 |
|---|---|---|---|---|---|---|---|---|
| Organic compound | Rubber component | Chloroprene rubber (CR)*1 | 0.4 | 70 | 70 | 70 | 70 | 70 |
| | | Chlorosulfonated polyethylene (CSM) *2 | 0.35 | 0 | 0 | 0 | 0 | 0 |
| | | Chlorinated polyethylene (CPE) *3 | 0.3 | 10 | 10 | 0 | 0 | 0 |
| | | NV*4 | 0.17 | 0 | 0 | 0 | 0 | 0 |
| | | Styrene-butadiene rubber (SBR)*5 | 0 | 30 | 30 | 30 | 30 | 30 |
| | | Butadiene rubber (BR)*5-2 | 0 | 0 | 0 | 0 | 0 | 0 |
| Inorganic compound | Filler | FEF carbon black*6 | 0 | 65 | 65 | 65 | 65 | 65 |
| | | silica*7 | 10 | 115 | 15 | 15 | 15 | 15 |
| Organic compound | Chlorinated additive | Chlorinated paraffin 70*8 | 0.7 | 0 | 0 | 0 | 0 | 0 |
| | | Chlorinated paraffin 40*9 | 0.43 | 5 | 10 | 15 | 20 | 25 |
| | Plasticizer | Spindle oil*10 | 0 | 10 | 5 | 0 | 0 | 0 |
| Inorganic compound | Zinc oxide | | 0 | 5 | 5 | 5 | 5 | 5 |
| | Magnesium oxide | | 10 | 4 | 4 | 4 | 4 | 4 |
| Organic compound | Wax | | 0 | 2 | 2 | 2 | 2 | 2 |
| | Age resistor | | 0 | 3 | 3 | 3 | 3 | 3 |
| | Cobalt stearate | | 0 | 2 | 2 | 2 | 2 | 2 |
| Sulfur | | | 0 | 1 | 1 | 1 | 1 | 1 |
| Organic compound | Vulcanization accelerator | | 0 | 2 | 2 | 2 | 2 | 2 |

| | Chlorination ratio | Comparative example 23 | Comparative example 24 | Comparative example 25 | Comparative example 26 | Comparative example 27 |
|---|---|---|---|---|---|---|
| Left side of formula | | 14.1 | 15.1 | 16.1 | 16.7 | 17.3 |
| Right side of formula | | 11.7 | 11.7 | 11.7 | 11.9 | 12.1 |
| Evaluation | Flame response (evaluation result) | Excellent | Excellent | Excellent | Excellent | Excellent |
| | Flame response (seconds) | 8 | 5 | 2 | 2 | 3 |
| | Viscosity rise ratio | Poor | Poor | Poor | Poor | Poor |
| Difference between left and right sides | | 2.4 | 3.4 | 4.4 | 4.8 | 5.2 |

[Table 10]

| | | | Chlorination ratio | Comparative example 28 | Example 19 | Comparative example 29 | Example 20 | Example 21 | Comparative example 30 | Example 22 | Example 23 | Example 24 |
|---|---|---|---|---|---|---|---|---|---|---|---|---|
| Organic compound | Rubber component | Chloroprene rubber (CR)*1 | 0.4 | 50 | 50 | 50 | 50 | 50 | 50 | 50 | 30 | 40 |
| | | Chlorosulfonated polyethylene (CSM)*2 | 0.35 | 5 | 10 | 0 | 0 | 0 | 0 | 0 | 10 | 10 |
| | | Chlorinated polyethylene (CPE) *3 | 0.3 | 0 | 0 | 5 | 10 | 15 | 0 | 0 | 0 | 0 |
| | | NV*4 | 0.17 | 0 | 0 | 0 | 0 | 0 | 10 | 20 | 0 | 0 |
| | | Styrene-butadiene rubber (SBR) *5 | 0 | 45 | 40 | 45 | 40 | 35 | 40 | 30 | 60 | 50 |
| | | Butadiene rubber (BR)*5-2 | 0 | 0 | 0 | 0 | 0 | 0 | 0 | 0 | 0 | 0 |
| Inorganic compound | Filler | FEF carbon black*6 | 0 | 65 | 65 | 65 | 65 | 65 | 65 | 65 | 65 | 65 |
| | | Silica*7 | 0 | 15 | 15 | 15 | 15 | 15 | 15 | 15 | 15 | 15 |
| Organic compound | Chlorinated additive | Chlorinated paraffin 70*8 | 0.7 | 5 | 5 | 5 | 5 | 5 | 5 | 5 | 20 | 20 |
| | | Chlorinated paraffin 40 *9 | 0.43 | 0 | 0 | 0 | 0 | 0 | 0 | 0 | 0 | 0 |
| | Plasticizer | Spindle oil*10 | 0 | 15 | 15 | 15 | 15 | 15 | 15 | 15 | 15 | 15 |
| Inorganic compound | Zinc oxide | | 0 | 5 | 5 | 5 | 5 | 5 | 5 | 5 | 5 | 5 |
| | Magnesium oxide | | 0 | 4 | 4 | 4 | 4 | 4 | 4 | 4 | 4 | 4 |
| Organic compound | Wax | | 0 | 2 | 2 | 2 | 2 | 2 | 2 | 2 | 2 | 2 |
| | Age resistor | | 0 | 3 | 3 | 3 | 3 | 3 | 3 | 3 | 3 | 3 |
| | Cobalt stearate | | 0 | 2 | 2 | 2 | 2 | 2 | 2 | 2 | 2 | 2 |
| Sulfur | | | 0 | 1 | 1 | 1 | 1 | 1 | 1 | 1 | 1 | 1 |

EP 3 309 209 A1

| | | Chlorination ratio | Comparative example 28 | Example 19 | Comparative example 29 | Example 20 | Example 21 | Comparative example 30 | Example 22 | Example 23 | Example 24 |
|---|---|---|---|---|---|---|---|---|---|---|---|
| Organic compound | Vulcanization accelerator | 0 | 2 | 2 | 2 | 2 | 2 | 2 | 2 | 2 | 2 |
| Left side of formula | | | 11.5 | 12.3 | 11.4 | 12.1 | 12.8 | 11.5 | 12.3 | 12.6 | 14.3 |
| Right side of formula | | | 11.9 | 11.9 | 11.9 | 11.9 | 11.9 | 11.9 | 11.9 | 12.4 | 12.4 |
| Evaluation | Flame response (evaluation result) | | Poor | Good | Poor | Fair | Excellent | Poor | Good | Good | Excellent |
| | Flame response (seconds) | | 75 | 27 | 78 | 35 | 7 | 90 | 23 | 30 | 2 |
| | Viscosity rise ratio | | Excellent | Good | Excellent | Excellent | Excellent | Excellent | Excellent | Excellent | Excellent |
| Difference between left and right sides | | | -0.3 | 0.5 | -0.5 | 0.2 | 0.9 | -0.4 | 0.4 | 0.2 | 1.9 |

[Table 11]

| | | | Chlorination ratio | Example 3 | Example 25 | Example 26 | Example 27 | Example 6 | Example 10 | Example 28 |
|---|---|---|---|---|---|---|---|---|---|---|
| Organic compound | Rubber component | Chloroprene rubber (CR)*1 | 0.4 | 50 | 20 | 30 | 60 | 60 | 60 | 60 |
| | | Chlorosulfonated polyethylene (CSM) *2 | 0.35 | 0 | 0 | 0 | 0 | 0 | 0 | 0 |
| | | Chlorinated polyethylene (CPE) *3 | 0.3 | 0 | 0 | 0 | 0 | 0 | 0 | 0 |
| | | NV*4 | 0.17 | 0 | 0 | 0 | 0 | 0 | 0 | 0 |
| | | Styrene-butadiene rubber (SBR)*5 | 0 | 50 | 80 | 70 | 40 | 40 | 40 | 40 |
| | | Butadiene rubber (BR)*5-2 | 0 | 0 | 0 | 0 | 0 | 0 | 0 | 0 |
| Inorganic compound | Filler | FEF carbon black*6 | 0 | 65 | 65 | 65 | 65 | 65 | 65 | 65 |
| | | Silica*7 | 0 | 15 | 15 | 15 | 15 | 15 | 15 | 15 |
| Organic | compound Chlorinated additive | Chlorinated paraffin 70*8 | 0.7 | 15 | 40 | 40 | 4 | 5 | 25 | 30 |
| | | Chlorinated paraffin 40 *9 | 0.43 | 0 | 0 | 0 | 0 | 0 | 0 | 0 |
| | Plasticizer | Spindle oil*10 | 0 | 15 | 15 | 15 | 15 | 15 | 15 | 15 |
| Inorganic compound | Zinc oxide | | 0 | 5 | 5 | 5 | 5 | 5 | 5 | 5 |
| | Magnesium oxide | | 0 | 4 | 4 | 4 | 4 | 4 | 4 | 4 |
| Organic compoun d | Wax | | 0 | 2 | 2 | 2 | 2 | 2 | 2 | 2 |
| | Age resistor | | 0 | 3 | 3 | 3 | 3 | 3 | 3 | 3 |
| | Cobalt stearate | | 0 | 2 | 2 | 2 | 2 | 2 | 2 | 2 |
| Sulfur | | | 0 | 1 | 1 | 1 | 1 | 1 | 1 | 1 |
| Organic compound | Vulcanization accelerator | | 0 | 2 | 2 | 2 | 2 | 2 | 2 | 2 |

(continued)

| | Chlorination ratio | Example 3 | Example 25 | Example 26 | Example 27 | Example 6 | Example 10 | Example 28 |
|---|---|---|---|---|---|---|---|---|
| Left side of formula | | 13.3 | 14.2 | 15.7 | 12.3 | 12.6 | 17.4 | 18.4 |
| Right side of formula | | 12.2 | 13.0 | 13.0 | 11.8 | 11.9 | 12.6 | 12.7 |
| Evaluation | Flame response (evaluation result) | Excellent | Excellent | Excellent | Good | Good | Excellent | Excellent |
| | Flame response (seconds) | 10 | 3 | 1 | 16 | 27 | 4 | 0 |
| | Viscosity rise ratio | Excellent | Excellent | Excellent | Good | Good | Good | Good |
| Difference between left and right sides | | 1.1 | 1.2 | 2.8 | 0.5 | 0.7 | 4.8 | 5.7 |

[Table 12]

| | | | Chlorination ratio | Example 3 | Example 29 |
|---|---|---|---|---|---|
| Organic compound | Rubber component | Chloroprene rubber (CR)*1 | 0.4 | 50 | 50 |
| | | Chlorosulfonated polyethylene (CSM)*2 | 0.35 | 0 | 0 |
| | | Chlorinated polyethylene (CPE) *3 | 0.3 | 0 | 0 |
| | | NV*4 | 0.17 | 0 | 0 |
| | | Styrene-butadiene rubber (SBR)*5 | 0 | 50 | 0 |
| | | Butadiene rubber (BR)*5-2 | 0 | 0 | 50 |
| Inorganic compound | Filler | FEF carbon black*6 | 0 | 65 | 65 |
| | | Silica*7 | 0 | 15 | 15 |
| Organic compound | Chlorinated additive | Chlorinated paraffin 70*8 | 0.7 | 15 | 15 |
| | | Chlorinated paraffin 40 *9 | 0.43 | 0 | 0 |
| | Plasticizer | Spindle oil* 10 | 0 | 15 | 15 |
| Inorganic compound | Zinc oxide | | 0 | 5 | 5 |
| | Magnesium oxide | | 0 | 4 | 4 |
| Organic compound | Wax | | 0 | 2 | 2 |
| | Age resistor | | 0 | 3 | 3 |
| | Cobalt stearate | | 0 | 2 | 2 |
| Sulfur | | | 0 | 1 | 1 |
| Organic compound | Vulcanization accelerator | | 0 | 2 | 2 |
| Left side of formula | | | | 13.3 | 13.3 |
| Right side of formula | | | | 12.2 | 12.2 |
| Evaluation | Flame response (evaluation result) | | | Excellent | Excellent |
| | Flame response (seconds) | | | 10 | 8 |
| | Viscosity rise ratio | | | Excellent | Excellent |
| Difference between left and right sides | | | | 1.1 | 1.1 |

[Table 13]

| | | | Chlorination ratio | Example 30 | Example 31 | Example 32 | Example 33 | Comparative example 31 | Example 34 |
|---|---|---|---|---|---|---|---|---|---|
| Organic compound | Rubber component | Chloroprene rubber (CR)*1 | 0.4 | 60 | 60 | 60 | 60 | 60 | 60 |
| | | Chlorosulfonated polyethylene (CSM)*2 | 0.35 | 5 | 10 | 0 | 0 | 0 | 0 |
| | | Chlorinated polyethylene (CPE) *3 | 0.3 | 0 | 0 | 5 | 10 | 0 | 0 |
| | | NV*4 | 0.17 | 0 | 0 | 0 | 0 | 5 | 10 |
| | | Styrene-butadiene rubber (SBR)*5 | 0 | 35 | 30 | 35 | 30 | 35 | 30 |
| | | Butadiene rubber (BR)*5-2 | 0 | 0 | 0 | 0 | 0 | 0 | 0 |
| Inorganic compound | Filler | FEF carbon black*6 | 0 | 65 | 65 | 65 | 65 | 65 | 65 |
| | | Stica*7 | 0 | 15 | 15 | 15 | 15 | 15 | 15 |
| Organic compound | Chloride additive | Chlorinated paraffin 70*8 | 0.7 | 0 | 0 | 0 | 0 | 0 | 0 |
| | | Chlorinated paraffin 40 *9 | 0.43 | 0 | 0 | 0 | 0 | 0 | 0 |
| | P last icizer | Spindle oil*10 | 0 | 15 | 15 | 15 | 15 | 15 | 15 |
| Inorganic compound | Zinc oxide | | 0 | 5 | 5 | 5 | 5 | 5 | 5 |
| | Magnesium oxide | | 0 | 4 | 4 | 4 | 4 | 4 | 4 |
| Organic compound | Wax | | 0 | 2 | 2 | 2 | 2 | 2 | 2 |
| | Age resistor | | 0 | 3 | 3 | 3 | 3 | 3 | 3 |
| | Cobalt stearate | | 0 | 2 | 2 | 2 | 2 | 2 | 2 |
| Sulfur | | | 0 | 1 | 1 | 1 | 1 | 1 | 1 |
| Organic compound | [Vulcanization accelerator | | 0 | 2 | 2 | 2 | 2 | 2 | 2 |
| Left side of formula | | | | 12.0 | 12.9 | 11.9 | 12.6 | 11.6 | 12.0 |
| Right side of formula | | | | 11.7 | 11.7 | 11.7 | 11.7 | 11.7 | 11.7 |

(continued)

| | Chlorination ratio | Example 30 | Example 31 | Example 32 | Example 33 | Comparative example 31 | Example 34 |
|---|---|---|---|---|---|---|---|
| Evaluation | Flame response (evaluation result) | Good | Excellent | Good | Excellent | Poor | Good |
| | Flame response (seconds) | 25 | 5 | 29 | 8 | 112 | 23 |
| | Viscosity rise ratio | Good | Good | Good | Good | Good | Good |
| Difference bet wen left and right sides | | 0.4 | 1.2 | 0.2 | 0.9 | -0.1 | 0.3 |

*1 to *10 in Tables 1 to 13 denote the following.

*1 Chloroprene rubber (CR) (chlorinated polymer): manufactured by Denki Kagaku Kogyo Kabushiki Kaisha, DENKA chloroprene "M40"
*2 Chlorosulfonated polyethylene (CSM): manufactured by Tosoh Corporation, "TS530"
*3 Chlorinated polyethylene (CPE): manufactured by Showa Denko K.K., "Elaslen 301A"
*4 Blend rubber (NV) of acrylonitrile-butadiene rubber (NBR) and polyvinyl chloride (PVC): made by JSR Corporation, "NV72"
*5 Styrene-butadiene rubber (SBR): manufactured by JSR, "JSR1500"
*5-2 Butadiene rubber (BR): manufactured by JSR, "BR01" (cis-1,4 bond content of 95%)
*6 FEF carbon black: manufactured by Asahi Carbon Co., Ltd., "Asahi #65": iodine adsorption of 43 mg/g, DBP oil absorption of 121 mL/100 g
*7 Silica: manufactured by Tosoh Silica Corporation, "Nipsil AQ"
*8 Chlorinated paraffin 70 (chlorinated flame retardant):

manufactured by Ajinomoto Fine-Techno Co., Inc., "Empara-70": chlorination ratio of 70%

*9 Chlorinated paraffin 40 (chlorinated flame retardant):

manufactured by Ajinomoto Fine-Techno Co., Inc., "Empara-43": chlorination ratio of 43%

*10 Spindle oil: manufactured by JX Nippon Oil & Energy Corporation, "Super Oil Y22"

As can be understood from Tables 1 to 13, Examples 1 to 34, which include less than 70 parts by mass of chloroprene rubber (CR) in 100 parts by mass of the rubber component and satisfy the following relation (1), are capable of achieving both the flame retardance as a vulcanized rubber and the shelf stability as an unvulcanized rubber, as compared with Comparative Examples 1 to 31 which do not meet the above-mentioned requirements.

$$\sum_{k=1}^{n} A_k X_k > 0.2 \cdot Y \qquad \cdots \quad (1)$$

INDUSTRIAL APPLICABILITY

The disclosed hose rubber composition is suitable for use in, for example, an intermediate rubber layer and/or outer surface rubber layer of a hydraulic hose of a hydraulic excavator used in a mine such as a coal mine.

REFERENCE SIGNS LIST

| 1 | hose |
|---|---|
| 10 | inner surface rubber layer |
| 11, 13, 15, 17 | intermediate rubber layer |
| 12, 14, 16, 18 | reinforcement layer |
| 19 | outer surface rubber layer |

**Claims**

1. A hose rubber composition comprising an organic compound, the hose rubber composition obtainable by compounding a compounding ingredient to a rubber component, wherein:

a chloroprene rubber is contained at an amount of less than 70 parts by mass in 100 parts by mass of the rubber component;
a chlorinated polymer other than chloroprene rubber is contained in the rubber component as an optional component;
a sulfur and, as an optional component, a chlorinated compounding ingredient are contained in the compounding ingredient; and
a relation (1) is satisfied:

$$\sum_{k=1}^{n} A_k X_k > 0.2 \cdot Y \qquad \cdots \quad (1)$$

where $A_k$ represents a chlorination ratio without unit of each type of the chloroprene rubber, the chlorinated polymer other than chloroprene rubber or the chlorinated compounding ingredient, as a chlorinated compound contained in the hose rubber composition; $X_k$ represents a content in terms of mass% of each type of the chlorinated compound in the hose rubber composition; n represents a total number of types of the chlorinated compound in the hose rubber composition; and Y represents a total content in terms of mass% of the organic compound and the sulfur in the hose rubber composition.

2. The hose rubber composition according to claim 1, wherein:

   a difference between a left side and a right side in the relation (1) is 0.5 or more.

3. The hose rubber composition according to claim 1 or 2, wherein:

   the chlorinated polymer is at least one type selected from the group consisting of chlorinated polyethylene, chlorosulfonated polyethylene and polyvinyl chloride.

4. The hose rubber composition according to any one of claims 1 to 3, wherein:

   the chloroprene rubber is contained at an amount of 30 parts by mass or more in 100 parts by mass of the rubber component, and
   the chlorinated compounding ingredient is compounded at an amount of 20 parts by mass or more per 100 parts by mass of the rubber component.

5. The hose rubber composition according to any one of claims 1 to 3, wherein:

   the chlorinated compounding ingredient is at least any one among a chlorinated aliphatic compound and a chlorinated phosphate ester compound.

6. The hose rubber composition according to claim 5, wherein:

   the chlorinated compounding ingredient is a chlorinated paraffin as the chlorinated aliphatic compound.

7. The hose rubber composition according to claim 6, wherein:

   the chlorinated paraffin is compounded at an amount of 5 parts to 50 parts by mass per 100 parts by mass of the rubber component.

8. The hose rubber composition according to claim 6 or 7, wherein:

   a chlorination ratio of the chlorinated paraffin is 40% to 70%.

9. The hose rubber composition according to any one of claims 1 to 8, the hose rubber composition further comprising a carbon black.

10. The hose rubber composition according to any one of claims 1 to 9, wherein:

    the rubber component further contains at least any one among a styrene-butadiene rubber and a butadiene rubber.

11. The hose rubber composition according to any one of claims 1 to 10, wherein:

silica is further compounded at an amount of 5 parts to 25 parts by mass per 100 parts by mass of the rubber component.

12. The hose rubber composition according to any one of claims 1 to 11, wherein:

a plasticizer is further compounded at an amount of 20 parts by mass or less per 100 parts by mass of the rubber component.

13. A hose comprising a rubber layer using the hose rubber composition according to any one of claims 1 to 12.

# FIG. 1

## INTERNATIONAL SEARCH REPORT

<table>
<tr><td colspan="2">International application No.<br>PCT/JP2016/002701</td></tr>
</table>

A. CLASSIFICATION OF SUBJECT MATTER
See extra sheet.

According to International Patent Classification (IPC) or to both national classification and IPC

B. FIELDS SEARCHED

Minimum documentation searched (classification system followed by classification symbols)
C08L1/00-101/14, C08K3/00-13/08, F16L9/00-11/26, C08J5/00-5/22

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho  1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2013-129684 A  (Bridgestone Corp.),<br>04 July 2013 (04.07.2013),<br>claims 1, 4; paragraphs [0014], [0029], [0042]<br>to [0050]; table 1; examples<br>& US 2014/0329035 A1<br>claims 1, 4; paragraphs [0019], [0060], [0061],<br>[0092] to [0106]; table 1; examples<br>& WO 2013/076989 A1      & EP 2784116 A1<br>& AU 2012341843 A        & CN 103946300 A | 1,3,9-13<br>2,4-8 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>09 August 2016 (09.08.16) | Date of mailing of the international search report<br>23 August 2016 (23.08.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

International application No.

PCT/JP2016/002701

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | WO 2014/188676 A1  (Bridgestone Corp.),<br>27 November 2014 (27.11.2014),<br>paragraphs [0052] to [0061]; table 1;<br>comparative examples<br>& JP 2014-228043 A      & US 2016/0130429 A1<br>paragraphs [0118] to [0156]; table 1;<br>comparative examples<br>& EP 3001084 A1        & AU 2014269809 A<br>& CN 105229356 A | 1,2,9-12<br>3-8,13 |
| A | JP 2014-009333 A  (The Yokohama Rubber Co.,<br>Ltd.),<br>20 January 2014 (20.01.2014),<br>entire text<br>& US 2015/0183970 A1<br>entire text<br>& WO 2014/007220 A1      & DE 112013002860 T<br>& TW 201418370 A        & CN 104379659 A<br>& KR 10-2015-0020572 A | 1-13 |
| A | JP 2003-313367 A  (Denki Kagaku Kogyo Kabushiki<br>Kaisha),<br>06 November 2003 (06.11.2003),<br>entire text<br>(Family: none) | 1-13 |
| A | JP 2005-060546 A  (Daiso Co., Ltd.),<br>10 March 2005 (10.03.2005),<br>entire text<br>(Family: none) | 1-13 |
| A | JP 2012-172052 A  (Mitsubishi Cable Industries,<br>Ltd.),<br>10 September 2012 (10.09.2012),<br>entire text<br>(Family: none) | 1-13 |

Form PCT/ISA/210 (continuation of second sheet) (January 2015)

**INTERNATIONAL SEARCH REPORT**

International application No.

PCT/JP2016/002701

Continuation of A. CLASSIFICATION OF SUBJECT MATTER
  (International Patent Classification (IPC))

C08L11/00(2006.01)i, C08K3/04(2006.01)i, C08K3/06(2006.01)i,
C08K3/36(2006.01)i, C08K5/521(2006.01)i, C08L9/00(2006.01)i,
C08L9/06(2006.01)i, C08L23/28(2006.01)i, C08L23/34(2006.01)i,
C08L27/04(2006.01)i, C08L27/24(2006.01)i, F16L11/08(2006.01)i,
C08J5/00(2006.01)n

            (According to International Patent Classification (IPC) or to both national
            classification and IPC)

Form PCT/ISA/210 (extra sheet) (January 2015)

**EP 3 309 209 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010121006 A
- WO 2009035109 A1